# EUROPÄISCHE PATENTSCHRIFT

(11) **EP 1 229 175 B1**
(45) Veröffentlichungstag und Bekanntmachung des Hinweises auf die Patenterteilung: **25.08.2004**
(21) Anmeldenummer: 01129504.5
(22) Anmeldetag: 11.12.2001
(51) Int. Cl.: E03F 5/04

(54) **Ablauf**
Drain outlet
Bouche d'écoulement

(30) Priorität: 31.01.2001 DE 20101589 U
(43) Veröffentlichungstag der Anmeldung: 07.08.2002
(73) Patentinhaber: VIEGA GmbH & Co. KG., 57439 Attendorn (DE)
(72) Erfinder: Viegener, Walter, 57439 Attendorn (DE)
(74) Vertreter: Dantz, Jan Henning

(56) Entgegenhaltungen:
- EP-A- 0 457 012
- DE-A- 4 430 039
- US-A- 5 299 836

## Beschreibung

Die vorliegende Erfindung betrifft einen Ablauf, insbesondere zur Montage in einer Boden- bzw. Deckenöffnung, mit einem Ablauftopf aus Kunststoff, der eine siphonartige Umlenkung aufweist und der über Befestigungsmittel in einer Öffnung eines Bodens oder einer Decke festlegbar ist mit einem aus Kunststoff bestehenden Ablaufrohr das an den Ablauftopf angeschlossen ist, und mit einem Schutzkasten aus verzinktem Stahl in dem der Ablauftopf aufgenommen ist.

Es ist bekannt, Abläufe in einer Boden- bzw. Deckenöffnung zu montieren, um in einem mehretagigen Gebäude eine Abflussmöglichkeit, beispielsweise für Reinigungs- und Abwasser zu schaffen. Die Öffnung im Boden bzw. in der Decke aus Beton wird dabei meist mit einem Übermaß hergestellt, um unterschiedliche Typen von Abläufen in der Öffnung montieren zu können. Der Freiraum zwischen Ablauf und der Aussparung im Beton wird entweder mit Beton ausgegossen oder mit einem feuerfesten Material ausgeschäumt.

Im Brandfall bilden die Ablauföffnungen eine Gefährdung, da durch die Wärmeentwicklung in dem unteren Geschoss Rauch und das Feuer durch die Ablauföffnung hindurch tritt und in das nächste Geschoss gelangt, so dass sich der Brand relativ schnell ausbreiten kann. Zwar ist es möglich, durch den Einsatz metallischer Materialien den Durchtritt des Brandes für eine gewisse Zeitdauer zu verhindern. Allerdings ist die Zeitdauer zu kurz bemessen, damit die Anforderungen an eine Brandschutzmaßnahme (mind. 90 Minuten Feuer- und Rauchschutz) erfüllt sind.

Aus der US 5 299 836 ist ein Ablauf ohne Umlenkung mit einem unteren angeschlossenen Rohr aus Kunststoff bekannt, bei dem im unteren Bereich eine Hülse aus schäumendem Material angeordnet ist, das im Brandfall expandiert und die Außenseite des Rohres eng umschließt und abdichtet. Durch die Expansion des Materials wird verhindert, dass die Bauteile nach unten fallen könnten, denn das Ablaufrohr und die erforderlichen Anschlusselemente bestehen sämtlich aus Kunststoff und könnten daher abschmelzen.

Ferner ist aus der gattungsbildenden EP 457 012 eine Ablaufarmatur für Fussböden bekannt, bei dem ein Ablauftopf mit einer siphonartigen Umlenkung vorgesehen ist, an den ein unteres Ablaufrohr angeschlossen ist. Aufgrund der Umlenkung ist die in dem Boden vorzusehende Öffnung stufenartig ausgebildet. Im Brandfall können das Ablaufrohr und der Ablauftopf aus Kunststoff abschmelzen und ermöglichen somit einen Durchtritt der Flammen.

Es ist daher Aufgabe der vorliegenden Erfindung, einen Ablauf der eingangs genannten Art zu schaffen, bei dem im Brandfall der Verschluss der Boden- bzw. Deckenöffnung möglichst schnell erreicht wird. Dieser soll dann den vorgeschriebenen Brand- und Rauchschutz über die vorgesehene Zeitdauer bieten. Ferner soll der Ablauf einfach zu montieren und kostengünstig herstellbar sein.

Diese Aufgabe wird mit einem Ablauf mit den Merkmalen des Anspruches 1 gelöst.

Wenn benachbart zu dem Ablauftopf mindestens eine Brandschutzeinlage zum Verschließen der Öffnung im Brandfall vorgesehen ist, braucht der Ablauf nicht mit aufwendigen Brandschutzkonstruktionen in der Öffnung befestigt werden, da mittels der Brandschutzeinlage schon das Verschließen der Öffnung im Brandfall möglich ist. Die Brandschutzeinlagen können dabei aus einem stark aufschäumenden Material gebildet sein, das durch die Expansion die Öffnung im Boden bzw. in der Decke verschließt. Das aufgeschäumte Material verhindert den Rauch- und Feuerdurchtritt für mindestens 90 Minuten. Die Montage des Ablaufes gestaltet sich dabei einfach, da die Brandschutzeinlage lediglich lose in eine dafür vorgesehene Aufnahme eingelegt werden kann oder auch darin fest angebracht sein kann. Für eine einfache Montage des Ablaufes ist der Ablauftopf dabei in einem Schutzkasten aus verzinktem Stahl aufgenommen, in dem eine Brandschutzeinlage einlegbar ist.

Gemäß der Erfindung umgibt mindestens eine Brandschutzeinlage den Ablauftopf ringförmig, so dass die Öffnung besonders schnell in der Fläche verschlossen wird. Dabei ist in dem Ablauftopf eine Umlenkung vorgesehen und das Ablaufrohr ist mittig an den Ablauftopf angeschlossen, so dass eine erste Brandschutzeinlage um das Ablaufrohr und eine zweite Brandschutzeinlage an der unteren Umlenkung vorgesehen sein kann. Die Anordnung der Brandschutzeinlagen im unteren Bereich gewährleistet eine schnelle Reaktion im Brandfall, da im unteren Bereich die Temperaturerwärmung als erstes erfolgt. Die Brandschutzeinlagen bestehen dabei meist aus einem Material, das bei Überschreiten einer vorgegebenen Temperatur, beispielsweise bei 200 °C stark expandieren. Um die Öffnung sicher zu verschließen, nimmt das Material in expandiertem Zustand vorzugsweise mindestens das zwanzigfache Volumen wie im Zustand als Brandschutzeinlage ein. Das expandierende Material verhindert sicher, dass Rauch und Feuer nicht durch die Öffnungen für einen Zeitraum von mindestens 90 Minuten durchtreten.

Um im Brandfall ein vollständiges Herabfallen des Ablaufrohres zu vermeiden, ist vorzugsweise das Ablaufrohr an dem Schutzkasten einhängbar, beispielsweise mittels eines Bajonettverschlusses, so dass bei Abschmelzen des aus Kunststoff bestehenden Ablaufrohres dieses nicht vollständig herunterfällt.

Die Erfindung wird nachfolgend anhand von drei Ausführungsbeispielen mit Bezug auf die beigefügten Zeichnungen näher erläutert. Es zeigen:
- Fig. 1: eine geschnittene Seitenansicht eines ersten Ausführungsbeispiels eines erfindungsgemäßen Ablaufs im montierten Zustand;
- Fig. 2: eine Draufsicht auf den Ablauf der Fig. 1;
- Fig. 3: eine geschnittene Seitenansicht eines zweiten Ausführungsbeispiels eines erfindungsgemäßen Ablaufes im montierten Zustand;
- Fig. 4: eine geschnittene Seitenansicht eines dritten Ausführungsbeispiels eines erfindungsgemäßen Ablaufes;
- Fig. 5: eine Schnittansicht entlang der Linie A-A des Ablaufes der Fig. 4;
- Fig. 6A, 6B: zwei Ansichten des Schutzkastens des Ablaufes der Fig. 4, und
- Fig. 7A, 7B: zwei Ansichten des Ablaufrohres des Ablaufs der Fig. 4.

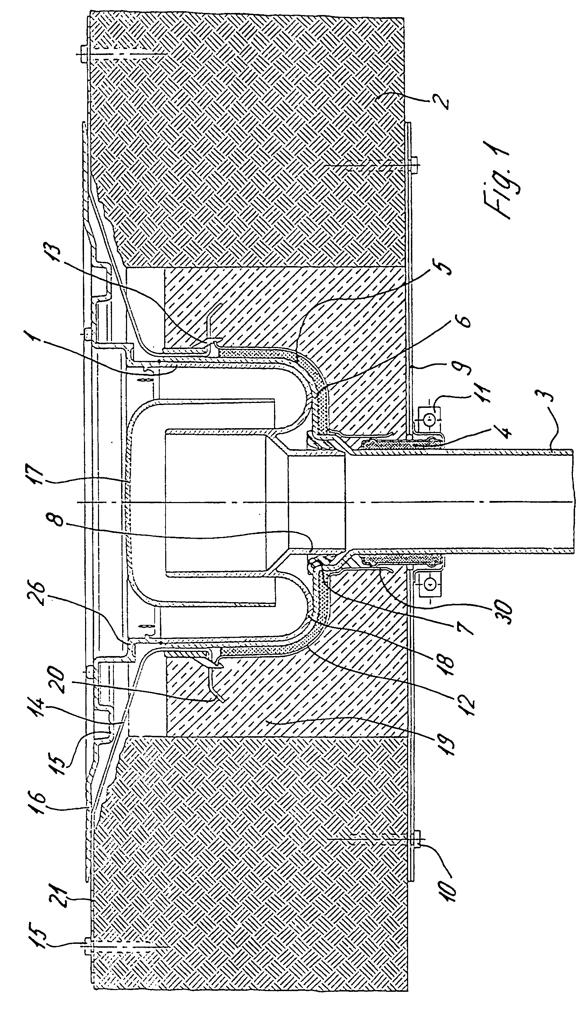

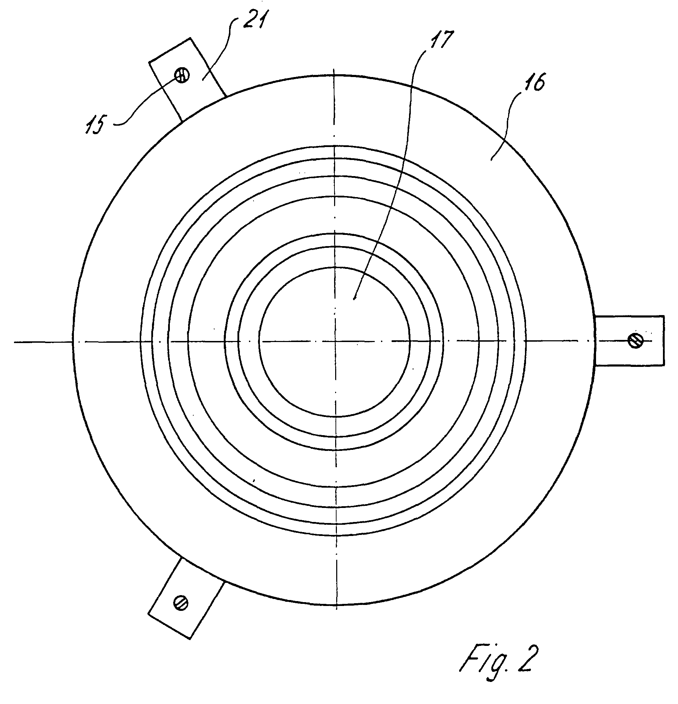

Der in den Fig. 1 und 2 gezeigte Ablauf umfasst einen Ablauftopf 1, der in einer Öffnung eines Bodens 2 montierbar ist. An der Unterseite des Ablauftopfes 1 mündet ein Ablaufrohr 3, das an seiner Oberseite einen topfartigen Flansch 6 aufweist, in dem der Ablauftopf 1 eingelegt ist. In der Mitte des Flansches 6 ist eine Dichtung 7 aufgenommen, in der ein Stutzen 8 des Ablauftopfes 1 eingefügt ist.

An dem oberen Bereich des Ablaufrohres 3 ist eine ringförmige erste Brandschutzeinlage 4 vorgesehen, während der topfartige Flansch von einer zweiten Brandschutzeinlage 5 umgeben ist. Die Brandschutzeinlagen 4 und 5 bestehen aus einem Material, das bei Überschreiten einer vorgegebenen Schwelltemperatur, beispielsweise 200 °C stark expandiert. Um die in dem Boden 2 vorgesehene Öffnung nach unten abzuschließen, ist eine Metallplatte 9 vorgesehen, die an mehreren Stellen 10 in den Boden 2 eingeschraubt ist. Optional ist unterhalb der Metallplatte 9 ist eine Klemmeinrichtung 11 vorgesehen, mittels der die ringförmige Brandschutzeinlage 4 auf dem Ablaufrohr 3 festklemmbar ist. Es können auch andere Befestigungseinrichtungen zur Festlegung der Brandschutzeinlage 4 vorgesehen sein.

Zur Befestigung des Ablaufes 1 innerhalb der Öffnung ist ein topfartiger Schutzkasten 12 vorgesehen, der über Verbindungsglieder 13 mit dem topfartigen Flansch 6 verbunden ist. Vorgesehene Haltearme 14 erstrecken sich aus dem Bereich der Öffnung heraus und liegen mit einem Abschnitt 21 auf dem Boden 2 auf. An diesem Abschnitt 21 sind Schrauben 15 zur Festlegung des Schutzkastens 12 vorgesehen.

Der Ablauftopf 1 ist im oberen Bereich mit einem Aufsatz 16 versehen, der sich bis außerhalb der Öffnung und auf den Boden 2 erstreckt. An dem Aufsatz 16 ist eine ringförmige Rille 25 sowie eine Kante 26 vorgesehen, an denen ein Deckel montierbar ist.

Um durch den Ablauf Wasser abströmen zu lassen, ist an dem Ablauf 1 eine U-förmige Umlenkung 18 und eine obere Umlenkung 17 vorgesehen, so dass das Wasser siphonartig in das Ablaufrohr 3 eintritt.

Damit zwischen der Oberseite und der Unterseite des Bodens 2 eine gewisse Dämmung hinsichtlich Wärme und Schall gegeben ist, befindet sich zwischen dem Ablauf und der mit Übermaß bemessenen Öffnung ein Füllstoff 19, der sich etwa bis in Höhe der Oberkante des topfartigen Flansches 6 erstreckt. Dieser Füllstoff 19 ist entweder aus Beton oder einer geeigneten rauch- und brandfesten Masse (Schaum) gebildet.

Zur Montage des Ablaufes wird zunächst ein Kernloch in den Boden 2 mit Übermaß eingebracht, um dann eine Montageeinheit mit dem Schutzkasten 12 und den Haltearmen 14 am Boden 2 zu befestigen. Ferner wird die Metallplatte 9 am Boden 2 befestigt und das Ablaufrohr 3 unter Zwischenschaltung der Brandschutzeinlagen 4 und 5 von oben eingeschoben. Diese Montageeinheit wird von außen mit Füllstoff 19 umgeben. Der Ablauftopf 1 mit dem oberen Gehäuseteil 16 kann dann von oben in die Montageeinheit eingesteckt bzw. montiert werden.

Im Falle eines Brandes schmilzt unter Umständen der aus Kunststoff, vorzugsweise Polypropylen bestehende Ablauftopf 1 und das aus Kunststoff, vorzugsweise Polypropylen bestehende Ablaufrohr 3. Bei Überschreiten einer gewissen Grenztemperatur expandieren dann die Brandschutzeinlagen 4 und 5, so dass die Öffnung in dem Boden 2 mittels der Brandschutzeinlagen 4 und 5 verschlossen wird. Je nach Füllstoff 19 kann dieser durch die Brandschutzeinlagen 4 und 5 ebenfalls ausgefüllt oder überdeckt werden. Ferner ist ein Haltearm 30 vorgesehen, der eine Vorfixierung der ersten Brandschutzeinlage 4 ermöglicht, damit diese nicht manuell in Position gehalten werden muss.

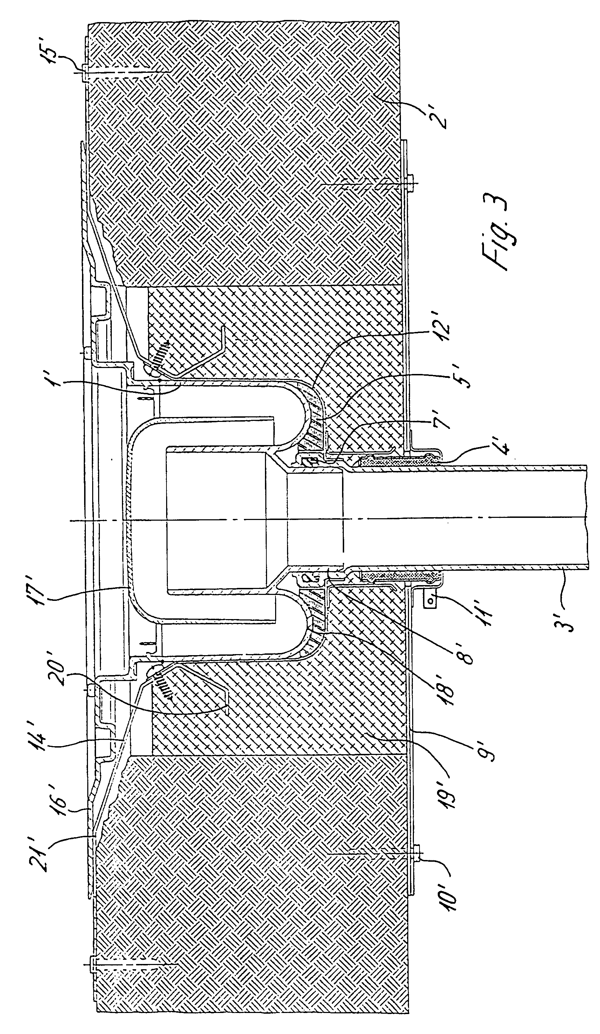

In Fig. 3 ist ein zweites Ausführungsbeispiel eines erfindungsgemäßen Ablaufes gezeigt, wobei ähnliche Bauteile mit denselben Bezugsziffern und einem Strich bezeichnet sind. Der Ablauf umfasst einen Ablauftopf 1', der mit einem Stutzen 8' in ein Ablaufrohr 3' mündet. Das Ablaufrohr 3' umfasst keinen topfartigen Flansch, sondern nur einen aufgeweiteten Abschnitt, in dem eine Nut zur Aufnahme einer Dichtung 7' vorgesehen ist. Eine erste Brandschutzeinlage 4' umgibt das Ablaufrohr 3' im oberen Bereich und ist mittels einer Klemmeinrichtung 11' an dem Ablaufrohr 3' festgelegt. Eine zweite Brandschutzeinlage 5' ist zwischen einem topfartigen Schutzkasten 12' und dem Ablauftopf 1' vorgesehen, wobei die Brandschutzeinlage 5' eine Aufnahme für die Umlenkungen 18' bildet.

Die Montage des gezeigten Ablauftopfes 1'erfolgt über den Schutzkasten 12', der mittels mehrerer Haltearme 14' über Schrauben 15' an dem Boden 2' befestigt ist. An der Unterseite des Bodens 2' ist eine Platte 9' über Schrauben 10' festgelegt, wobei an der Oberseite der Platte 9' ein Füllstoff 19' eingebracht ist. Die Montage des Ablaufs erfolgt analog zu dem ersten Ausführungsbeispiel.

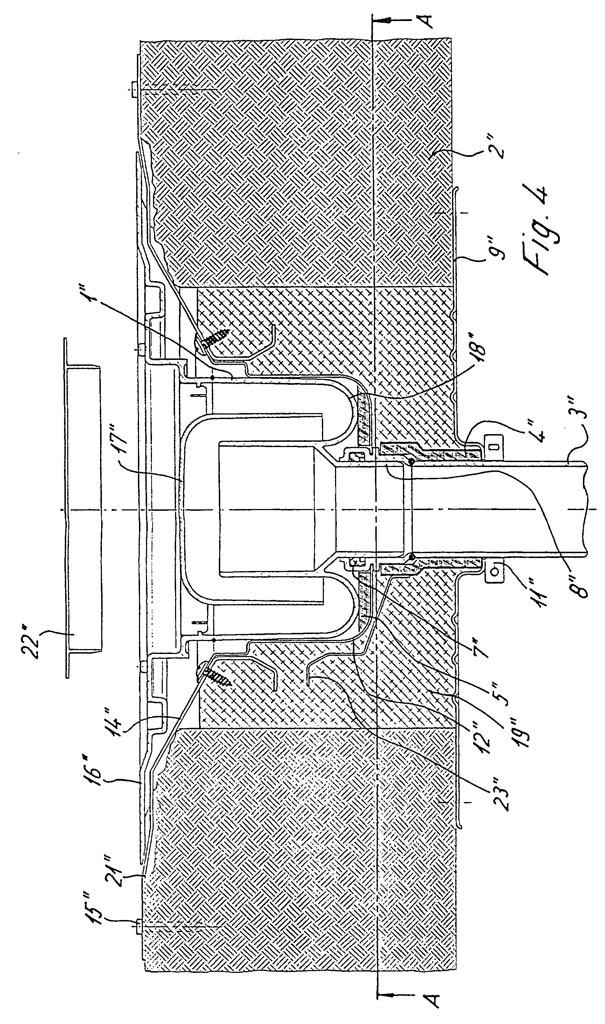

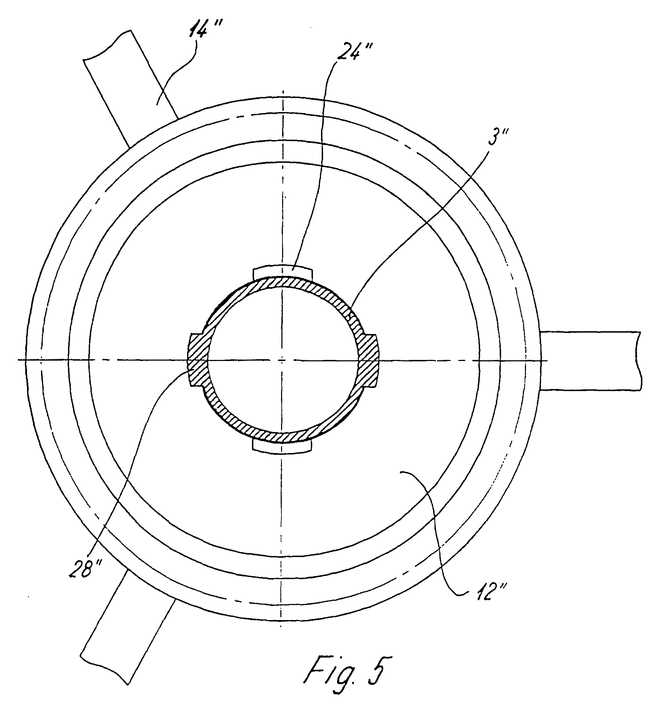

In den Fig. 4 und 5 ist ein drittes Ausführungsbeispiel eines erfindungsgemäßen Ablaufs gezeigt, wobei ähnliche Bauteile mit den gleichen Bezugszeichen mit zwei Strichen bezeichnet sind.

Der Ablauf umfasst einen Ablauftopf 1", der über einen Schutzkasten 12" an einem Boden 2 montierbar ist. Der Ablauftopf 1" ist mit einem oberen Teil 16" verbunden, in das ein Deckel 22" einfügbar ist. Die Montage des Schutzkastens 12" und des Ablauftopfes 1" erfolgt wie bei den vorangegangenen Ausführungsbeispielen.

Der Ablauftopf 1" mündet mit einem Stutzen 8" in einem Ablaufrohr 3", in dessen oberem Bereich eine Nut zur Aufnahme einer Dichtung 7" vorgesehen ist. Die ringförmige Brandschutzeinlage 4" umgibt nicht nur einen zylindrischen Abschnitt des Ablaufrohres 3", sondern auch einen aufgeweiteten oberen Bereich des Ablaufrohres 3". Direkt benachbart zu der Brandschutzeinlage 4" ist eine ringförmige horizontale Brandschutzeinlage 5" vorgesehen, auf der die untere Umlenkung 18" des Ablauftopfes 1" aufliegt. An der Brandschutzeinlage 4" ist ein Haltearm 23" montiert, der sich im Füllstoff 19" verankert. Nach unten ist die Brandschutzeinlage 4" im montierten Zustand über eine Platte 9" und eine Klemmeinrichtung 11" gehalten.

Wie insbesondere aus der Schnittansicht der Fig. 5 ersichtlich ist, ist das Ablaufrohr 3" über einen Bajonettverschluss an dem Schutzkasten 12" gehalten. Hierfür sind in dem Boden des Schutzkastens 12" Aussparungen 24" vorgesehen, durch die an dem Ablaufrohr 3" vorgesehene Vorsprünge 28" greifen können, so dass bei Drehung des Ablaufrohrs 3" dieses an dem Schutzkasten 12" einhängbar ist. Der Schutzkasten 12" ist über Haltearme 14" an dem Boden 2" gehalten.

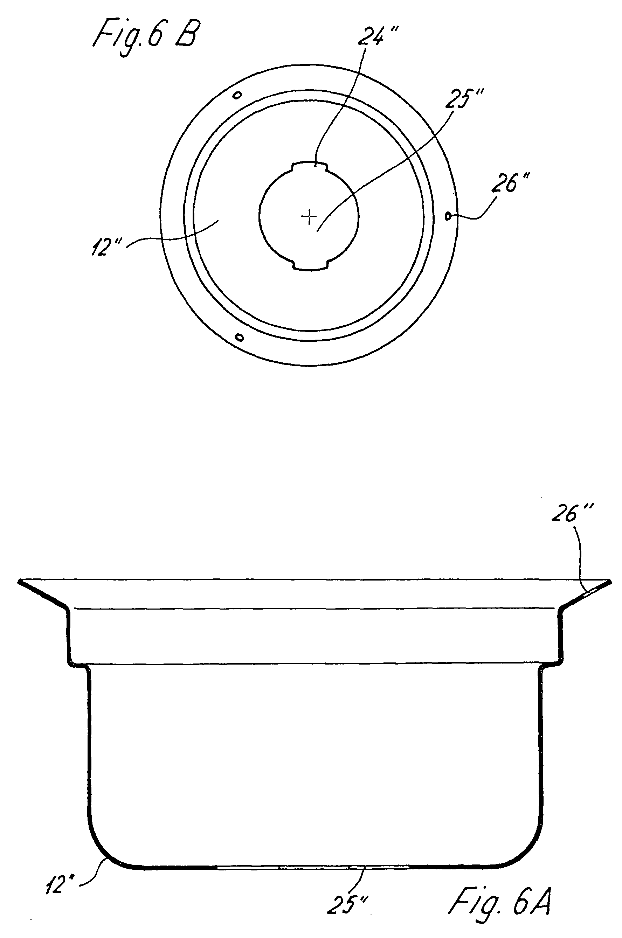

Wie aus den Fig. 6A und 6B ersichtlich ist, besitzt der Schutzkasten 12" eine untere Öffnung 25" mit Aussparungen 24" und im oberen Bereich einen Flansch mit Öffnungen 26" zur Montage mit den Haltearmen 14".

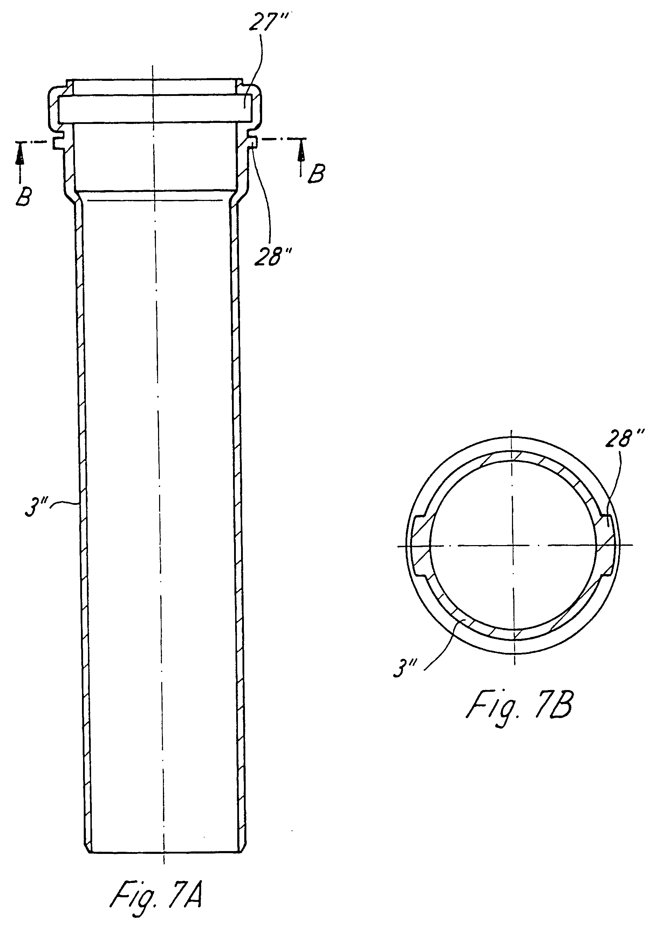

In den Fig. 7A und 7B ist das Ablaufrohr 3" gezeigt. Das Ablaufrohr 3" umfasst eine obere Nut 27" zur Aufnahme der Dichtung 7" und am Umfang angeordnete Vorsprünge 28", die in die Aussparung 24" an dem Schutzkasten 12" eingreifen können.

## Patentansprüche

1. Ablauf, insbesondere zur Montage in einer Boden- bzw. Deckenöffnung, mit einem Ablauftopf (1, 1', 1") aus Kunststoff, der eine siphonartige Umlenkung (17, 17', 17", 18, 18', 18") aufweist und der über Befestigungsmittel in einer Öffnung eines Bodens (2, 2', 2") oder einer Decke festlegbar ist, mit einem aus Kunststoff bestehenden Ablaufrohr (3, 3',3") das an den Ablauftopf angeschlossen ist, und mit einem Schutzkasten (12, 12', 12'') aus verzinktem Stahl, in dem der Ablauftopf aufgenommen ist, **dadurch gekennzeichnet, dass** der Ablauf benachbart zu dem Ablauftopf (1, 1', 1'') mindestens eine den Ablauftopf (1, 1', 1") ringförmig umgebende Brandschutzeinlage (5, 5', 5") aufweist die zum kompletten Verschließen der Öffnung im Brandfall vorgesehen ist und aus einem Material besteht, das bei Überschreiten einer vorgegebenen Temperatur stark expandiert.

2. Ablauf nach Anspruch 1, **dadurch gekennzeichnet, dass** das Ablaufrohr (3, 3', 3") mittig in dem Ablauftopf (1, 1', 1 ") mündet, wobei der Ablauf eine erste Brandschutzeinlage (4, 4', 4") um das Ablaufrohr (3, 3', 3 ") und eine zweite Brandschutzeinlage (5, 5', 5) an der unteren Umlenkung (18, 18', 18'') aufweist.

3. Ablauf nach Anspruch 1 oder 2, **dadurch gekennzeichnet, dass** das Material im expandierten Zustand mindestens das zwanzigfache Volumen wie im Zustand als Brandschutzeinlagen (4, 4', 4", 5, 5', 5") einnimmt.

4. Ablauf nach einem der Ansprüche 1 bis 3, **dadurch gekennzeichnet, dass** die den Ablauftopf umgebende Brandschutzeinlage (5, 5', 5") in dem Schutzkasten (12, 12', 12") eingelegt ist.

5. Ablauf nach Anspruch 4, **dadurch gekennzeichnet, dass** das Ablaufrohr (3") an dem Schutzkasten (12") eingehängt ist.

6. Ablauf nach einem der Ansprüche 1 bis 5, **dadurch gekennzeichnet, dass** zwischen dem Schutzkasten (12, 12', 12") und dem Rand der Öffnung ein Füllmaterial angeordnet ist.

## Claims

1. Drain, in particular for installation in a floor or ceiling opening, having a plastic drain cup (1, 1', 1'') which has a siphon-like deflection (17, 17', 17'', 18, 18', 18") and can be fixed via fastening means in an opening of a floor (2, 2', 2'') or of a ceiling, having a drain pipe (3, 3', 3") which consists of plastic and is connected to the drain cup, and having a protective box (12, 12', 12'') of galvanized steel in which the drain cup is accommodated, **characterized in that**, adjacent to the drain cup (1, 1', 1''), the drain has at least one fireproofing insert (5, 5', 5'') which annularly surrounds the drain cup (1, 1', 1'') and is provided for completely closing the opening in the event of fire and which consists of a material which greatly expands when a predetermined temperature is exceeded.

2. Drain according to Claim 1, **characterized in that** the drain pipe (3, 3', 3") opens centrally in the drain cup (1, 1', 1''), the drain having a first fireproofing insert (4, 4', 4") around the drain pipe (3, 3', 3'') and a second fireproofing insert (5, 5', 5'') on the lower deflection (18, 18', 18'').

3. Drain according to Claim 1 or 2, **characterized in that** the material in the expanded state takes up at least twenty times the volume as in the state as fireproofing inserts (4, 4', 4'', 5, 5', 5'').

4. Drain according to one of Claims 1 to 3, **characterized in that** the fireproofing insert (5, 5', 5'') surrounding the drain cup is inserted in the protective box (12, 12', 12'').

5. Drain according to Claim 4, **characterized in that** the drain pipe (3") is fitted on the protective box (12'').

6. Drain according to one of Claims 1 to 5, **characterized in that** a filling material is arranged between the protective box (12, 12', 12'') and the edge of the opening.

## Revendications

1. Bouche d'écoulement, en particulier destinée au montage dans une ouverture de plancher ou de plafond, avec une cuvette d'écoulement (1, 1', 1'') en matière plastique, qui présente un déflecteur de type siphon (17, 17', 17", 18, 18', 18") et qui peut être fixé par l'intermédiaire de moyens de fixation dans une ouverture d'un plancher (2, 2', 2") ou d'un plafond, avec un tuyau d'écoulement (3, 3', 3") en matière plastique qui est raccordé à la cuvette d'écoulement, et avec un carter de protection (12, 12', 12") en acier galvanisé dans lequel est logé la cuvette d'écoulement, **caractérisée en ce que** la bouche d'écoulement présente à proximité de la cuvette d'écoulement (1, 1', 1") au moins un insert de protection incendie (5, 5', 5") entourant la cuvette d'écoulement (1, 1', 1") de façon annulaire, l'insert étant prévue pour la fermeture complète de l'ouverture en cas d'incendie et se composant d'un matériau qui se dilate fortement en cas de dépassement d'une température prédéterminée.

2. Bouche d'écoulement selon la revendication 1, **caractérisée en ce que** le tuyau d'écoulement (3, 3', 3") débouche de façon centrale dans la cuvette d'écoulement (1, 1', 1"), la bouche d'écoulement présentant un premier insert de protection incendie (4, 4', 4") autour du tuyau d'écoulement (3, 3', 3") et un deuxième insert de protection incendie (5, 5', 5") au niveau du déflecteur inférieur (18, 18', 18").

3. Bouche d'écoulement selon la revendication 1 ou 2, **caractérisée en ce que** le matériau à l'état dilaté occupe au moins vingt fois le volume de l'état en tant qu'insert de protection incendies (4, 4', 4", 5, 5', 5'').

4. Bouche d'écoulement selon l'une quelconque des revendications 1 à 3, **caractérisée en ce que** l'insert de protection incendie (5, 5', 5") entourant la cuvette d'écoulement est insérée dans le carter de protection (12, 12', 12'').

5. Bouche d'écoulement selon la revendication 4, **caractérisée en ce que** le tuyau d'écoulement (3") est accroché au carter de protection (12'').

6. Bouche d'écoulement selon l'une quelconque des revendications 1 à 5, **caractérisée en ce qu'**un matériau de remplissage est disposé entre le carter de protection (12, 12', 12'') et le bord de l'ouverture.
